# EUROPÄISCHE PATENTSCHRIFT

(11) **EP 1 668 348 B1**
(45) Veröffentlichungstag und Bekanntmachung des Hinweises auf die Patenterteilung: **02.12.2009**
(21) Anmeldenummer: 04787053.0
(22) Anmeldetag: 29.09.2004
(51) Int. Cl.: G01N 27/20, G01N 27/24

(54) **SYSTEM ZUR ERMITTLUNG EINER BESCHÄDIGUNG EINER WAND FÜR EINEN STRÖMUNGSKANAL EINER STRÖMUNGSMASCHINE**
SYSTEM FOR DETERMINATION OF THE DAMAGE TO A WALL IN A FLOW CHANNEL OF A TURBINE ENGINE
SYSTEME DE DETECTION D'UN DOMMAGE SUBI PAR UNE PAROI D'UN CANAL D' ECOULEMENT D'UNE TURBOMACHINE

(30) Priorität: 30.09.2003 DE 10345505; 29.07.2004 DE 102004036725
(43) Veröffentlichungstag der Anmeldung: 14.06.2006
(73) Patentinhaber: SIEMENS AKTIENGESELLSCHAFT, 80333 München (DE)
(72) Erfinder: BOSSELMANN, Thomas, 91080 Marloffstein (DE); EIERMANN, Franz, 96199 Zapfendorf (DE); HUBER, Klaus, 91090 Effeltrich (DE)
(86) Internationale Anmeldenummer: PCT/EP2004/010900
(87) Internationale Veröffentlichungsnummer: WO 2005/033686

(56) Entgegenhaltungen:
- EP-A- 0 773 359
- WO-A1-03/102567
- DE-A- 19 923 143
- US-A- 3 504 279
- US-A- 5 969 260
- US-A1- 2003 122 682
- US-B1- 6 288 528
- PATENT ABSTRACTS OF JAPAN Bd. 0101, Nr. 67 (M-488), 13. Juni 1986 (1986-06-13) & JP 61 018618 A (YOKOHAMA GOMU KK), 27. Januar 1986 (1986-01-27)

## Beschreibung

Die vorliegende Erfindung betrifft ein System zur Ermittlung einer Beschädigung einer Wand für einen Strömungskanal einer Strömungsmaschine, insbesondere eine Brennkammerwand einer Gasturbine, und/oder eines in den Strömungskanal hineinragenden oder in diesem angeordneten Bauteils. Die Erfindung betrifft ferner ein Wandelement für die Wand sowie ein Verfahren zum Ermitteln einer Beschädigung der Wand und eine Gasturbine mit einem erfindungsgemäßen System.

Strömungsmaschinen, wie beispielsweise Dampf- oder Gasturbinen, werden als Wärme-Kraft-Maschinen in der Technik eingesetzt, um eine in einem Gasstrom gespeicherte Energie in eine mechanische Energie zu überführen, insbesondere in eine Drehbewegung. Darüber hinaus kommen auch Strömungsmaschinen wie Verdichter in Betracht, mit denen mechanische Energie einem Gasstrom zugeführt werden kann. Um bei Gasturbinen einen möglichst großen Gesamtwirkungsgrad hinsichtlich der Energieausnutzung zu erreichen, werden die Gaseintrittstemperaturen von der Brennkammer in den Strömungskanal der Gasturbine möglichst hoch gewählt. Die Gaseintrittstemperaturen liegen beispielsweise bei 1200°C.

Um den hohen physikalischen Anforderungen, insbesondere aufgrund der Temperatur und des Druckes, standhalten zu können, wird oftmals der Brennraum mit einer Beschichtung aus Keramikkacheln versehen. Die einzelnen Kacheln kleiden den Brennraum mosaikartig aus.

Die Wand des Strömungskanals, bei der Brennkammer einer Gasturbine gebildet durch die Keramikkacheln, unterliegt einer Alterung unter anderem aufgrund der hohen Beanspruchung. So können bei den Kacheln vereinzelt Risse auftreten, so dass diese während der routinemäßigen Inspektionen ausgetauscht werden müssen. Die Festlegung der Inspektionsintervalle ist daher so zu bemessen, dass beschädigte Kacheln ausgetauscht werden können, bevor sie vollständig defekt sind und größerer Schaden an der Strömungsmaschine entsteht. So können beispielsweise Bruchstücke beschädigter Kacheln in den Strömungskanal gelangen und an nachgeordneten Leit- und Laufschaufeln schwere Schäden verursachen. An der Bruchstelle ist darüber hinaus ein Bereich hinter der ursprünglichen Verkachelung freigelegt, der nunmehr den physikalischen Beanspruchungen des Brennraums direkt ausgesetzt ist. Dies führt nicht nur zu enormen Beschädigungen, sondern es kann darüber hinaus zu einer großen Gefährdung bezüglich der Betriebssicherheit der Strömungsmaschine führen.

Grundsätzlich gilt diese Problematik natürlich nicht nur für die Kacheln des Brennraums, sondern für die Wand des Strömungskanals bzw. in den Strömungskanal hineinragende Bauelemente, wie beispielsweise Leit- und Laufschaufeln einer Turbine.

Für die Schaufeln einer Turbine schlägt beispielsweise die DE 19 15 930 A1 vor, in einem besonders gefährdeten Bereich einer Schaufel einen Widerstandsdraht vorzusehen, der durch den Schaufelbereich hindurchgeführt ist. Der Widerstandsdraht ist durch den Schaufelfuß hindurch aus der Schaufel herausgeführt und an einen elektrischen Warnstromkreis angeschlossen. Diese Ausgestaltung erweist sich einerseits mit Blick auf die Fertigungstechnik als nachteilig, da das Vorsehen eines Widerstandsdrahts im Schaufelmaterial zusätzliche Probleme bezüglich Herstellung und Stabilität aufwirft, wie beispielsweise unterschiedliche Temperaturausdehnung und dergleichen. In der praktischen Ausführung kommt es so zu Fehlmeldungen, insbesondere wenn hohe Temperaturdifferenzen an den Schaufeln auftreten können. Darüber hinaus erweist es sich als nachteilig, dass der Widerstandsdraht elektrisch zu kontaktieren ist. An eine entsprechende Kontaktierung sind daher enorm hohe Anforderungen zu stellen, die neben dem zu erwartenden hohen Montageaufwand auch hohe Kosten bewirken.

Eine weitere Druckschrift, die DE 102 07 455 A1, lehrt dagegen das Vorsehen von Beschleunigungsaufnehmern an einer Gasturbine, mit deren Hilfe abgebrochene Maschinenteile durch die von innen verursachten Geräusche ermittelt werden sollen. Nachteilig an dieser Ausgestaltung ist, dass der Schaden erst aufgetreten sein muss, damit eine Detektion erfolgen kann. Bei der Messwerterfassung ist bereits ein größerer Schaden entstanden, beispielsweise wenn ein Kachelbruchstück einer Gasturbine in den nachgeordneten Turbinenbereich gelangt und dort Schaufeln beschädigt. In diesem Fall ist es nicht nur damit getan, die defekte Kachel auszutauschen, sondern es ist darüber hinaus erforderlich, das Bruchstück der defekten Kachel aus dem Strömungskanal zu entfernen und die beschädigten Schaufeln auszuwechseln. Es ist daher nicht nur ein hoher Montageaufwand erforderlich, sondern darüber hinaus neben unnötig hohen Kosten auch eine lange Standzeit zur Durchführung der Reparaturarbeiten, denn es müsste auch der Turbinenbereich repariert werden.

In der US 2003/122682 A1 ist eine Rissdetektionsvorrichtung für Gasturbinen angegeben, mit welcher Risse im Bereich der Befestigungen von Turbinenschaufeln ermittelt werden können. Hierzu sind unter der Oberfläche des zu untersuchenden Bauteils mehrere aus Drähten ausgeführte Stromkreise nebeneinander angeordnet. Die einzelnen Stromkreise werden dabei nacheinander von einer Energiequelle mit Energie beaufschlagt und von einem Sensor wieder abgefragt. Dies kann auch kontaktlos geschehen. Tritt ein Riss im Bauteil auf, der zumindest einen Draht durchtrennt, wird die Impedanz des zugehörigen Stromkreises verändert, was mit dem Sensor nachgewiesen wird. Im Betrieb werden alle Stromkreise der Vorrichtung direkt von ein- und demselben Anregungsknoten einzeln gespeist und direkt von ein- und demselben Detektionsknoten einzeln abgefragt. Die einzelnen Stromkreise sind dabei nicht miteinander gekoppelt.

In der US 5,969,260 ist eine Rissdetektionseinheit für Flugzeugflügel, insbesondere Landeklappen, angegeben. Auch hier sind mittels Drähten ausgeführte Stromkreise zur Rissdetektion vorgesehen.

In der WO 03/102567 A ist ein Hitzeschild, der in einer Brennkammer einer Gasturbine eingebaut ist, angegeben. Zur Erfassung von Rissen im Hitzeschild weist dieser ebenfalls zumindest einen Stromkreis auf, der mittels einer externen Kontrollvorrichtung kontaktlos abfragbar ist.

Es ist daher die Aufgabe der vorliegenden Erfindung, eine Möglichkeit zur Überwachung des Strömungskanals einer Gasturbine zu schaffen, die es ermöglicht, einzugreifen, bevor Bruchstücke der Wand bzw. deren Elemente oder von Bauteilen in den Strömungskanal freigesetzt werden.

Als Lösung wird mit der vorliegenden Erfindung ein System zur Ermittlung einer Beschädigung einer Wand für einen Strömungskanal einer Strömungsmaschine, insbesondere eine Brennkammerwand einer Gasturbine, und/oder eines in den Strömungskanal hineinragenden oder in diesem angeordneten Bauteils vorgeschlagen, welches die Merkmale des Anspruchs 1 aufweist.

Das erfindungsgemäße System vermeidet von vornherein die Verwendung von Kontakten, wodurch die Problematik der Kontaktierung in diesem physikalisch extrem belasteten Bereich vollständig vermieden werden kann. Die Kopplung kann darüber hinaus stationär oder auch nicht stationär vorgesehen sein. So kann beispielsweise eine Kopplung nur zu festen vorgegebenen Intervallen erfolgen, oder sie kann stattdessen permanent vorgesehen sein. Als Kopplung wird jede drahtlose Übertragung von Energie von der Energiequelle auf den leitfähigen Bereich betrachtet ebenso wie jegliche kontaktlose Detektion der elektrischen Größe im leitfähigen Bereich mittels des Sensors. Der Sensor ist ein zur zu messenden elektrischen Größe angepasstes Bauteil, beispielsweise ein Strommesssensor zur Ermittlung eines elektrischen Stromes oder ein Spannungssensor zur Ermittlung einer elektrischen Spannung.

Unter Strömungskanal einer Strömungsmaschine wird jeder Kanal verstanden, in dem eine Fluidströmung vorliegt also eine Brennkammer für eine Gasturbine oder ein Heizkraftwerk oder dergleichen. Eine Strömungsmaschine kann beispielsweise eine Gasturbine, eine Dampfturbine, aber auch ein Kompressor, Diffusor oder dergleichen sein.

Es ist somit möglich, die Wand des Strömungskanals der Strömungsmaschine zu überwachen und auch während des bestimmungsgemäßen Betriebs der Strömungsmaschine Defekte zu ermitteln, bevor hierdurch größere Schäden entstehen können. Die elektrische Größe kann beispielsweise ein elektrischer Strom oder auch eine elektrische Spannung sein. Tritt z.B. ein Riss in der Wand auf, so wirkt sich dieser auch auf den mit der Wand fest verbundenen, elektrisch leitfähigen Bereich aus, in dem dieser beschädigt bzw. unterbrochen wird oder seinen elektrischen Widerstand bzw. andere elektrische Parameter wie Dämpfung, Resonanzfrequenz oder dergleichen verändert. Um eine solche Veränderung messen zu können, wird mit der Energiequelle beispielsweise ein Strom im elektrisch leitfähigen Bereich erzeugt. Dieser Strom kann mit einem entsprechenden Stromsensor detektiert werden.

In dualer Weise kann derselbe erfinderische Effekt natürlich auch mit einer elektrischen Spannung erreicht werden, die im elektrischen Bereich erzeugt wird. Diese kann mit einem Spannungssensor detektiert werden.

Auch andere Funktionsprinzipien oder Mischformen können mittels der vorliegenden Erfindung realisiert werden, so beispielsweise die Ausnutzung von Resonanzeigenschaften des elektrischen Bereichs durch eine Impulsanregung oder dergleichen.

Zurückkommend auf die Ausführungsform, bei der ein Strom im elektrischen Bereich erzeugt wird, führt nun eine Beschädigung der Wand zu einer Beschädigung des elektrisch leitfähigen Bereichs, so dass der Stromfluss reduziert ist. Dies kann mit dem Stromsensor festgestellt werden. Auch ein Riss, der den leitfähigen Bereich nicht vollständig unterbricht, kann ermittelt werden, indem eine Reduzierung des Stromes mit dem Stromsensor festgestellt werden kann. Vorteilhaft kann somit bereits in einem Anfangsstadium der Beschädigung der Wand eine entsprechende Gegenmaßnahme eingeleitet werden, da die Beschädigung frühzeitig erkannt werden kann. Die Inspektionszeiträume der Strömungsmaschinen können deutlich genauer bestimmt werden, wodurch sich die Wartungsintervalle entsprechend verlängern. Insgesamt kann die Anzahl der Inspektionen reduziert und die Verfügbarkeit der Strömungsmaschine erhöht werden.

Besonders vorteilhaft wirkt sich dies bei Brennkammern einer Gasturbine aus, wobei das System natürlich auch bei anderen Strömungsmaschinen oder strömungstechnischen Einrichtungen zum Einsatz kommen kann, bei denen eine Überwachung der Wand gewünscht ist. Die Energiequelle kann beispielsweise durch einen Akkumulator, ein Netzgerät, einen Wechselspannungsgenerator, einen Impulsgenerator oder dergleichen gebildet sein. Der elektrische Strom kann im leitfähigen Bereich durch die Energiequelle kontaktlos erzeugt werden, was insbesondere bei den hohen Beanspruchungen im Bereich der Brennkammer einer Gasturbine vorteilhaft ist. Störanfällige Kontakte können vermieden werden. Je nach Bedarf kann die Messung sowie die Erzeugung der elektrischen Größe im leitfähigen Bereich kontinuierlich oder zu diskret vorgebbaren Zeitpunkten erfolgen.

Insbesondere können natürlich auch duale Anwendungen oder Mischanwendungen vorgesehen sein, so beispielsweise eine Anwendung, bei der die elektrische Größe durch eine elektrische Spannung gebildet ist. Die Energiequelle liefert in einer solchen Ausgestaltung eine elektrische Spannung, die in den elektrisch leitfähigen Bereich eingekoppelt wird. Mittels eines Spannungssensors kann die Spannung ermittelt werden, aus deren Wert ebenfalls auf den Zustand der Wand geschlossen werden kann.

Es wird ferner vorgeschlagen, dass der leitfähige Bereich als geschlossener elektrischer Leiter ausgebildet ist. Dies erleichtert einerseits eine kontaktlose Erzeugung der elektrischen Größe, beispielsweise Strom, Spannung, und ermöglicht andererseits besonders beanspruchte Bereiche der Wand oder des Bauteils gezielt dadurch zu überwachen, dass die Leiterschleife durch diese Bereiche geführt wird. Eine Stromerzeugung kann beispielsweise durch ein sich zeitlich bzw. räumlich änderndes Magnetfeld erreicht werden. Auf gleiche Weise kann der erzeugte Strom im geschlossenen Leiter mit dem Sensor detektiert werden.

Darüber hinaus wird vorgeschlagen, dass der leitfähige Bereich einen Teilbereich zur Einkopplung der elektrischen Größe aufweist. Vorteilhaft kann beispielsweise die Energie zur Erzeugung der elektrischen Größe im leitfähigen Bereich an einer vorgebbaren Stelle eingekoppelt werden. Der Bereich kann als Schleife für eine induktive Einkopplung eines Stroms ausgebildet sein oder auch mit beispielsweise zwei mit dem leitfähigen Bereich verbundene kapazitive Kopplungsstellen, über die beispielsweise eine elektrische Spannung eingekoppelt werden kann.

In einer Weiterbildung wird vorgeschlagen, dass der leitfähige Bereich einen Teilbereich zur Detektion der elektrischen Größe aufweist. Die Ausgestaltung des Bereichs zur Detektion ist vorteilhaft an die Kopplungswirkung angepasst, so beispielsweise eine Leiterschleife für eine induktive Kopplung des Sensors oder zwei Kopplungsflächen für eine kapazitive Kopplung des Sensors.

Weiterhin wird vorgeschlagen, dass der leitfähige Bereich Resonanzeigenschaften aufweist. So kann durch eine Impulsanregung oder auch durch eine periodische Anregung, vorzugsweise im Bereich einer Resonanzfrequenz, ein zeitlich veränderlicher Strom bzw. in dualer Weise eine Spannung, in diesem Fall ein Wechselstrom, mit geringem Aufwand erzeugt werden. Die Kosten für das System können gering gehalten werden. Die Resonanzeigenschaften können dadurch erreicht werden, dass der leitfähige Bereich selbst bereits über eine induktive Eigenschaft verfügt, die mit kapazitiver Kopplung unterschiedlicher Abschnitte des leitfähigen Bereichs untereinander die Resonanzeigenschaften bewirkt. Es können jedoch auch diskrete elektronische Bauteile vorgesehen sein, um die Resonanzeigenschaft auszubilden oder um sie zu verändern.

Darüber hinaus wird vorgeschlagen, dass der leitfähige Bereich ein kapazitives elektrisches Element aufweist. Der kapazitive Anteil, der die Resonanzeigenschaften beeinflusst, kann mit großer Genauigkeit und über einen weiten Bereich festgelegt werden. Ferner kann bei vorgegebenem Leiterbild des leitfähigen Bereichs mit dem kapazitiven Element die Resonanzfrequenz beeinflusst werden.

In einer weiteren Ausgestaltung der vorliegenden Erfindung wird vorgeschlagen, dass die Energiequelle eine Leiterschleife aufweist. Hierdurch kann vorteilhaft eine kontaktlose Kopplung mit dem leitfähigen Bereich der Wand erreicht werden. In dieser Ausgestaltung ist die Kopplung induktiv ausgebildet.

Darüber hinaus wird vorgeschlagen, dass die Energiequelle eine Wechselspannungsquelle ist. Gerade bei einer induktiven Kopplung kann mittels einer Wechselspannungsquelle eine einfache Strom- bzw. Spannungserzeugung im leitfähigen Bereich erreicht werden, indem das Transformatorprinzip angewendet wird. Die Frequenz der Wechselspannung kann vorteilhaft in einem Bereich der Resonanzfrequenz des leitfähigen Bereichs der Wand gewählt sein. Bei hoher Güte der Resonanz des leitfähigen Bereichs kann mit geringem Aufwand eine große Wechselspannung erreicht werden. Dies ermöglicht darüber hinaus bereits geringe Beschädigungen des leitfähigen Bereichs sicher zu detektieren.

In einer vorteilhaften Weiterbildung wird vorgeschlagen, dass der Sensor durch eine mit einer Messeinheit verbundene Leiterschleife gebildet ist. Bei einem zeitlich veränderlichen Strom im leitfähigen Bereich kann mittels induktiver Kopplung die Messeinheit den Strom im leitfähigen Bereich ermitteln. Eine kostengünstige zuverlässige Detektierung kann erreicht werden.

Darüber hinaus wird vorgeschlagen, dass die Messeinheit eine Wechselspannungsmessvorrichtung ist. Vorteilhaft ist die Wechselspannungsmessvorrichtung dazu geeignet, Frequenzen im Bereich der Resonanzfrequenz des leitfähigen Bereichs zu verarbeiten. Mit geringem Aufwand kann eine gute Messgenauigkeit erreicht werden.

Um den leitfähigen Bereich vor den Beanspruchungen im Strömungskanal, insbesondere dem Innenraum der Brennkammer, zu schützen, wird vorgeschlagen, dass der leitfähige Bereich an der im Strömungskanal gegenüberliegenden Seite der Wand angeordnet ist. Der leitfähige Bereich kann beispielsweise an der Oberfläche der Wand durch ein aufgebrachtes Leiterbild gebildet sein. Das Leiterbild kann aus einem geeigneten Metall wie beispielsweise Kupfer, Wolfram oder dergleichen gebildet sein. Es kann mittels bekannter Verfahren wie Beschichten, Ätzen, galvanisch abscheiden oder dergleichen auf die Wandoberfläche aufgebracht sein. Es kann aber auch vorgesehen sein, dass der leitfähige Bereich durch eine homogene, gleichmäßig verteilte Widerstandsschicht gebildet ist, beispielsweise hergestellt aus Graphit, einem Halbleitermaterial oder dergleichen. Durch in den leitfähigen Bereich eingebrachte Ausnehmungen können gewünschte Eigenschaften wie Resonanzfrequenz, Leitfähigkeit oder dergleichen gezielt eingestellt werden.

In einer weiteren Ausgestaltung wird vorgeschlagen, dass die Wand Wandelemente, insbesondere Kacheln, aufweist. Gerade hierdurch kommt das erfindungsgemäße System besonders zum Tragen, da einerseits mit dem erfindungsgemäßen System eine Überwachung der Kacheln in besonders einfacher Weise erreicht werden kann, wobei zugleich in dieser Ausgestaltung ein Austausch von defekten Wandelementen in herkömmlicher Weise mit geringem Aufwand erreicht werden kann.

Erfindungsgemäß sind die leitfähigen Bereiche mehrerer zueinander benachbart angeordneter Wandelemente miteinander magnetisch und/oder kapazitiv verkettet. So können die Wandelemente beispielsweise über die an ihren Enden angeordneten Teilbereiche miteinander induktiv und/oder kapazitiv gekoppelt sein. Kontakte können vollständig vermieden werden. Dies erleichtert nicht nur die Montage, da Kontakte auf ihre Funktion und Dauerhaftigkeit zu prüfen sind, sondern es vermeidet darüber hinaus die mit Kontakten während des Betriebs auftretenden Probleme.

Darüber hinaus ermöglicht die Erfindung, dass eine Vielzahl von Wandelementen gemeinsam mit nur einer Energiequelle und einem Sensor überwacht werden können. An einem Ende des Wandelementes wird mittels der Energiequelle eine elektrische Größe erzeugt, wobei dies am gegenüberliegenden Teilbereich zu einer Kopplung mit dem Teilbereich eines benachbart angeordneten Wandelements führt. Hieraus resultiert wiederum in diesem eine elektrische Größe, die ihrerseits am gegenüberliegenden Teilbereich des elektrisch leitfähigen Bereichs zu einer Kopplung zu einem Teilbereich eines weiteren benachbart angeordneten Wandelements führt. Am Ende dieser Kette ist eine Kopplung mit dem Sensor vorgesehen. Tritt nun in einem der Wandelemente ein Defekt auf, so ist in diesem der elektrisch leitfähige Bereich ebenfalls beschädigt. Die Ausbildung der elektrischen Größe wird behindert bzw. unterbrochen, so dass in allen folgenden Wandelementen ebenfalls keine elektrische Größe mehr erzeugt wird. Ein Defekt des leitfähigen Bereichs eines Wandelements kann demnach auch dann detektiert werden, wenn er nicht zu einer vollständigen Unterbrechung der elektrischen Größe führt, beispielsweise wenn bei einem Riss im leitfähigen Bereich aufgrund einer kapazitiven Kopplung noch ein Strom fließt. Bei Verwendung eines Hochfrequenzsignals kann durch Laufzeitmessungen die Position des Defekts ermittelt werden. So kann eine Überwachung aller Wandelemente mit geringem Aufwand erreicht werden, wobei zusätzlich die Reparatur dadurch erleichtert werden kann, dass die Position des defekten Wandelements ermittelbar ist.

Mit der Erfindung wird ferner ein Verfahren zum Ermitteln einer Beschädigung einer Wand des Strömungskanals einer Strömungsmaschine, insbesondere einer Brennkammerwand einer Gasturbine, und/oder eines in den Strömungskanal hineinragenden oder in diesem angeordneten Bauteils mit einem erfindungsgemäßen System vorgeschlagen, mit den in Anspruch 19 angegebenen Schritten.

Mit geringem Aufwand kann eine Überwachung der Wand des Strömungskanals der Strömungsmaschine erreicht werden. Die Überwachung kann beispielsweise permanent vorgesehen sein, so dass während des Betriebs der Strömungsmaschine der Zustand der Wand permanent überwacht wird. Daneben kann jedoch auch vorgesehen sein, dass eine Überwachung nur zu bestimmten Zeitpunkten nach einem vorgebbaren Schema durchgeführt wird. Die Gefahr eines größeren Schadens durch einen Defekt in der Wand oder am Bauteil kann reduziert werden. Weiterhin ermöglicht es die Anwendung des erfindungsgemäßen Verfahrens, dass Wartungsintervalle vergrößert werden, so dass nicht nur der Aufwand für die Wartung sondern auch die Standzeit der Strömungsmaschine deutlich reduziert werden können.

Weiterhin wird vorgeschlagen, dass als elektrische Größe ein elektrischer Strom oder eine elektrische Spannung verwendet wird, wobei der Strom oder die Spannung mittels induktiver oder kapazitiver Kopplung im leitfähigen Bereich erzeugt wird. Mittels bekannter Verfahren wie der induktiven oder kapazitiven Kopplung kann die elektrische Größe im leitfähigen Bereich erzeugt werden. Eine kostengünstige Ausführung kann erreicht werden.

Darüber hinaus wird vorgeschlagen, dass der Strom oder die Spannung im leitfähigen Bereich mittels induktiver oder kapazitiver Kopplung detektiert wird. Vorteilhaft lässt sich ferner mit einfachen, bekannten Mitteln eine kontaktlose Detektion erreichen. So kann der Sensor eine Spule aufweisen, die mit einem Teilbereich des leitfähigen Bereichs induktiv gekoppelt ist. Weiterhin ermöglicht diese Kopplungsart auch eine galvanische Trennung zwischen dem Sensor und dem leitfähigen Bereich der Wand. Aber auch eine thermische Entkopplung lässt sich hiermit mit geringem Aufwand realisieren.

In einer vorteilhaften Weiterbildung wird vorgeschlagen, dass als Strom ein Wechselstrom oder als Spannung eine Wechselspannung verwendet wird. Hierdurch kann ein kontinuierliches Messsignal erreicht werden, welches mit dem Sensor permanent detektiert werden kann.

Darüber hinaus wird vorgeschlagen, dass eine Frequenz des Wechselstroms oder der Wechselspannung im Bereich einer Resonanz des leitfähigen Bereichs verwendet wird. Vorteilhaft kann die Resonanz des leitfähigen Bereichs angeregt werden, so dass mit einem geringen Energieaufwand ein großer Wert der elektrischen Größe im leitfähigen Bereich erreicht werden kann. Die Messgenauigkeit kann erhöht werden.

Erfindungsgemäß wird vorgeschlagen, dass die Teilbereiche der elektrischen Bereiche von zueinander benachbart angeordneten Wandelementen miteinander magnetisch oder kapazitiv koppeln. Vorteilhaft kann eine Kette von Wandelementen gemeinsam auf eine Beschädigung überwacht werden. Der Aufwand für die Energieerzeugung im leitfähigen Bereich sowie die Detektion kann weiter reduziert werden.

Mit der Erfindung wird auch eine Gasturbine mit an einer in einem Strömungskanal eines Gehäuses drehbar gelagerten Rotorwelle angeordneten Laufschaufeln und drehfest angeordneten Leitschaufeln vorgeschlagen, wobei die Gasturbine eine Brennkammer mit einer Brennkammerwand und ein erfindungsgemäßes System zur Ermittlung einer Beschädigung der Brennkammerwand aufweist. Eine Vergrößerung der Verfügbarkeit der Gasturbine kann erreicht werden. Darüber hinaus ermöglicht die erfindungsgemäße Gasturbine eine Überwachung der Brennkammerwand während des bestimmungsgemäßen Betriebs. Die Wartungsintervalle können vergrößert werden und/oder eine Wartung muss erst bei einer entsprechenden Beschädigung der Wand erfolgen, das heißt, es kann die Festlegung vorgegebener Wartungsintervalle vermieden werden.

Weiterhin wird mit der Erfindung ein Verfahren zum Überwachen einer Brennkammerwand einer Gasturbine mit einem erfindungsgemäßen Verfahren vorgeschlagen. Eine kostengünstige, sichere Überwachung der Brennkammerwand während des Betriebs der Gasturbine kann erreicht werden.

Weitere Vorteile und Merkmale sind der folgenden Figurenbeschreibung zu entnehmen. Gleiche Bauteile sind in unterschiedlichen Figuren mit gleichen Bezugszeichen versehen. Hinsichtlich der Funktionen gleicher Bauteile wird auf die Beschreibung zum ersten Ausführungsbeispiel verwiesen.

### Es zeigen:

- Figur 1: eine perspektivische aufgeschnittene Ansicht einer Gasturbine,
- Figur 2: ein Wandelement mit einer leitfähigen Struktur auf einer Seite,
- Figur 3: einen schematischen Ausschnitt aus einer Brennkammer mit erfindungsgemäß benachbarten Wandelementen,
- Figur 4A: ein Diagramm, welches die Dämpfung eines Risses in einer Leitung der Leiterschleife darstellt,
- Figur 4B: ein Diagramm, welches die Dämpfung bei Unterbrechung beider Leitungen der Leiterschleife darstellt,
- Figur 5: eine schematische Ansicht einer verketteten Überwachung benachbarter Wandelemente mit Parallelresonanz,
- Figur 6: ein Diagramm, welches die Dampfung gekoppelter Schwingkreise über der Frequenz darstellt und
- Figur 7: einen schematischen Schnitt durch eine Brennkammer der Gasturbine in Fig. 1.

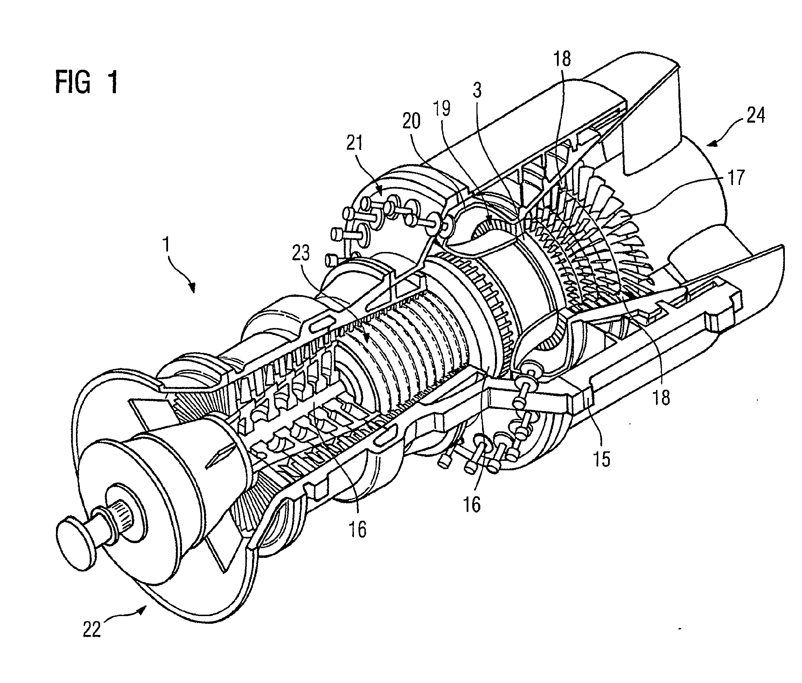

In Fig. 1 ist eine Gasturbine 1 in perspektivischer Ansicht, aufgeschnitten dargestellt. Die Gasturbine 1 weist an einer in einem Strömungskanal 3 eines Gehäuses 15 drehbar gelagerte Rotorwelle 16 angeordneten Laufschaufeln 17 und drehfest angeordneten Leitschaufeln 18 auf. An einem axialen Ende der Gasturbine 1 ist ein Lufteinlass 22 vorgesehen, dem in axialer Richtung ein Luftverdichter 23 nachgeordnet ist. An den Luftverdichter schließt sich in axialer Richtung eine Ringbrennkammer 19 an, welche eine Brennkammerwand 20 sowie Brenner 21 aufweist. In Strömungsrichtung nachgeordnet zur Brennkammer 19 ist der eigentliche Turbinenbereich, in dem die Leitschaufeln 18 und die Laufschaufeln 17 angeordnet sind. Der Strömungskanal 3 mündet in einem Gasaustritt 24.

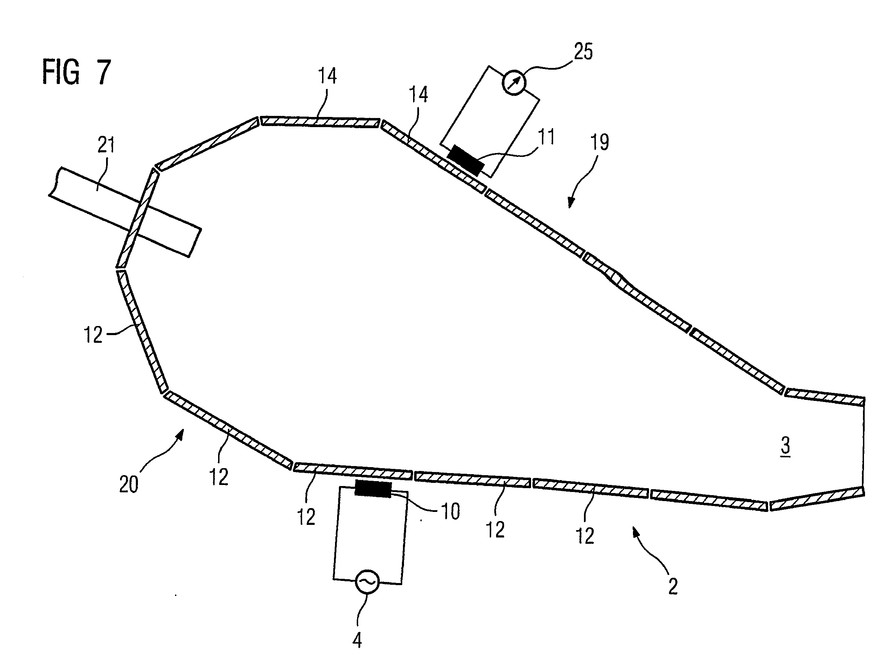

In Fig. 7 ist schematisch ein Ausschnitt aus der Brennkammer 20 im Schnitt vergrößert dargestellt. Zur Vereinfachung der Darstellung sind in dieser Figur nur einzelne Kachelelemente 14 dargestellt, die jedoch einen Bestandteil der Brennkammerwand 20 bilden, mit dem sie über nicht weiter dargestellte Befestigungselemente in Verbindung stehen. Die Kacheln 14 bestehen aus einem keramischen Werkstoff, der für die hohen physikalischen Beanspruchungen besonders ausgewählt ist.

Über den Brenner 21 wird der Brennkammer 19 ein zündfähiges Brennstoffgemisch zugeführt, in der Brennkammer 19 gezündet und über den Strömungskanal 3 dem nachfolgenden Turbinenbereich mit Laufschaufeln 17 und Leitschaufeln 18 zugeführt. Die Kacheln 14 kleiden die Brennkammer 19 strömungskanalseitig aus und ermöglichen somit eine Beständigkeit gegen hohe Verbrennungstemperaturen und hohen Druck.

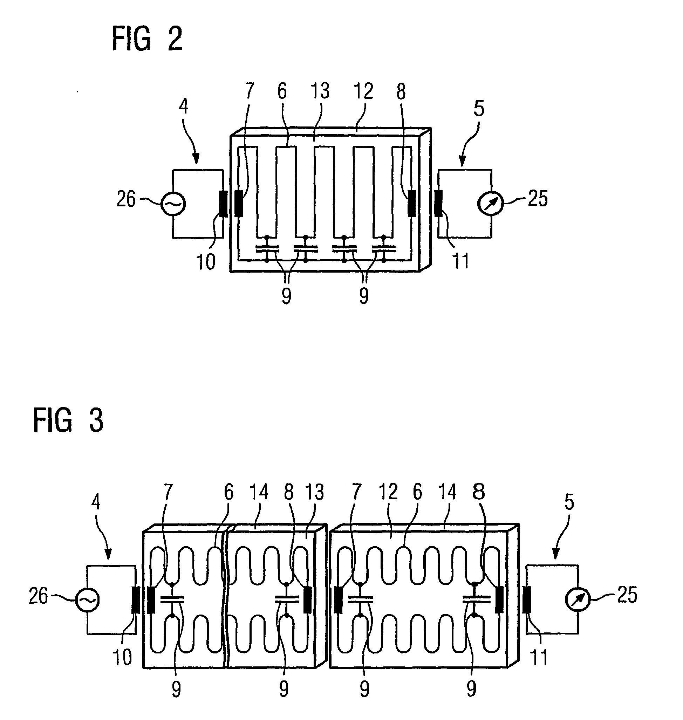

In Fig. 2 weist die Kachel 12 auf der dem Strömungskanal 3 gegenüberliegenden Seite 13 einen leitfähigen Bereich 6 auf. Während des bestimmungsgemäßen Betriebs liegt die Temperatur in der Brennkammer 19 bei ca. 1200°C. Die der Brennkammer 19 abgewandte Seite der Brennkammerwand 20 erreicht hierbei eine Temperatur von ca. 400°C. Auf dieser Seite der Brennkammerwand 20 ist der leitfähige Bereich 6 in Form eines die Oberfläche der Kachel 12 überdeckender, mäanderförmig strukturierter, dünner Leiter aus Wolfram aufgebracht. Der leitfähige Bereich 6 kann natürlich aus auch einem anderen geeigneten Werkstoff gebildet sein.

An zwei gegenüberliegenden Kanten sind Spulen 7, 8 vorgesehen, wobei die Spule 7 zur Einkopplung eines Stroms und die Spule 8 zur Detektierung bzw. Auskopplung eines Stroms geeignet ist. Dabei bildet die Leiterschleife 6 aufgrund der Leiterführung Kapazitäten 9 aus, so dass diskrete Bauelemente vermieden werden können. Die Kapazität der auf diese Weise gebildeten Kondensatoren 9 kann durch die Ausgestaltung der Leiterschleife sowie die relative Dielektrizitätskonstante des Kachelwerkstoffs beeinflusst werden. Vorliegend entsteht ein schwingungsfähiges System, welches Resonanzeigenschaften aufweist. Diese Resonanzeigenschaften können nun erfindungsgemäß detektiert werden, um den Zustand der Kachel 12 zu ermitteln.

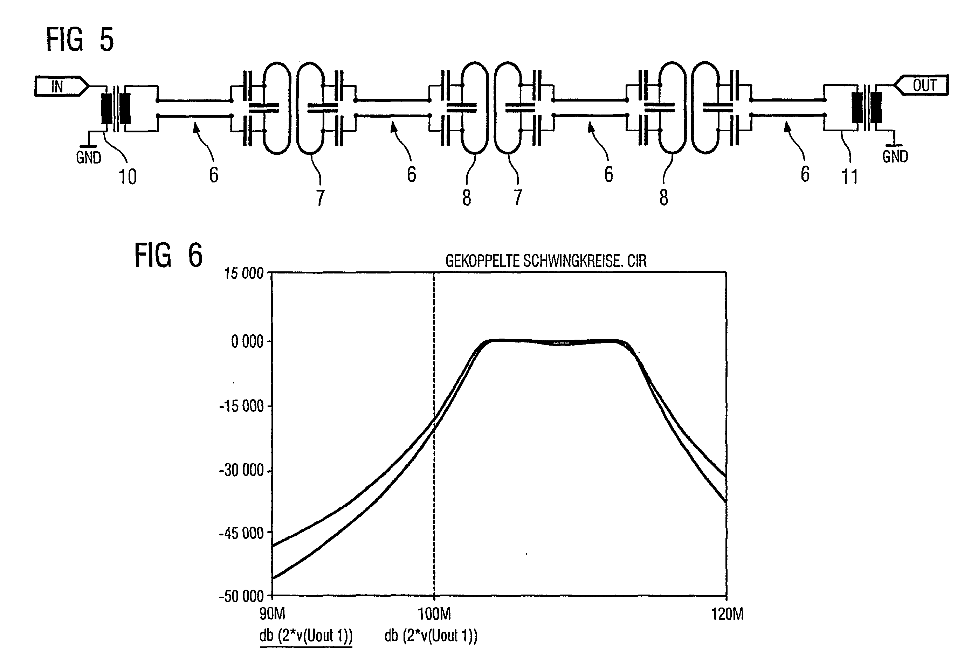

Der Zustand kann wie folgt ermittelt werden (Fig. 5). Ein Wechselspannungsgenerator 26 ist mit einer Spule 10 elektrisch leitend verbunden, welche die Energiequelle 4 bilden. Die Frequenz des Wechselspannungsgenerators 26 ist so gewählt, dass sie im Bereich einer der Resonanzfrequenzen des leitfähigen Bereichs 6 der Kachel 12 liegt. Vorliegend entspricht die Frequenz der Grundfrequenz des leitfähigen Bereichs 6 und beträgt ca. 110 MHz. Die Spule 10 ist in der Nähe der Spule 7 der Kachel 12 angeordnet, so dass über magnetische Kopplung von der Spule 10 in der Spule 7 eine Spannung induziert wird. Diese Spannung regt den leitfähigen Bereich 6 zum Schwingen auf seiner Resonanzfrequenz an. Eine solche Kachel 12 kann beispielsweise ein ringabschnittsförmiges Segment der Wand 20 bilden.

In der am gegenüberliegenden Ende angeordneten Spule 8 der Kachel 12 wird bedingt durch den hochfrequenten Stromfluss ebenfalls ein magnetisches Wechselfeld erzeugt, dessen Frequenz der angeregten Frequenz entspricht. Mittels der in der Nähe der Spule 8 angeordneten Messspule 11 kann das Magnetfeld detektiert werden. Das magnetische Wechselfeld der Spule 8 durchdringt die Spule 11 und induziert in dieser eine entsprechende Spannung. Die Spule 11 ist elektrisch leitend mit einem Wechselspannungsmessgerät 25 verbunden, mit welchem die induzierte Spannung messbar ist. Die Anordnung aus Spule 11 und Messgerät 25 bildet den Sensor 5.

Wird nun die Leiterschleife 6 an irgendeiner Stelle unterbrochen, so wird der Stromfluss verändert, so dass die Spule 8 der Kachel 12 ein geändertes Magnetfeld erzeugt. Gerade bei Verwendung von Hochfrequenz führt ein Riss nicht zwangsläufig zum Abreißen des Stromflusses. Vielmehr ändert sich aufgrund der Kopplungseffekte über den Riss hinweg die Impedanz der Leiterschleife 6, wodurch sich ggf. die Resonanzfrequenz, auf jeden Fall jedoch der Stromfluss ändert. Obwohl über die Spule 10 eine Spannung in die Spule 7 induziert wird, wird durch die Spule 8 noch ein wenn auch nur geringes Magnetfeld erzeugt, so dass das Messinstrument 25 ein entsprechendes Signal anzeigt. Ein Riss in der Kachel 12, der unweigerlich zu einer Unterbrechung der Leiterschleife 6 führt, bewirkt somit, dass trotz Zuführung von Energie eine Signaländerung detektiert werden kann. Somit kann der Zustand der Kachel 12 überwacht werden. Sinkt bei gleichmäßiger Zuführung von Energie durch den Wechselspannungsgenerator 26 das Messsignal am Messinstrument 25 ab, so erhält der Bediener den Hinweis, dass die Kachel 12 beschädigt ist. Er kann somit umgehend entsprechende Maßnahmen in die Wege leiten.

Eine Ausgestaltung der vorliegenden Erfindung ist in Fig. 3 dargestellt. In Fig. 3 sind mehrere benachbarte Kacheln 14 schaltungstechnisch verkettet bzw. kaskadiert angeordnet. Die einzelnen gegenüberliegenden Spulen 7, 8 benachbarter Kacheln 14 sind miteinander induktiv gekoppelt. Am Beginn der Kachelanordnung ist eine Spule 10, welche elektrisch leitend mit einem Wechselspannungsgenerator 26 verbunden ist, induktiv mit der Spule 7 der ersten Kachel 14 gekoppelt. Am gegenüberliegenden Ende der Kette ist die Spule 8 der letzten Kachel 14 mit einer Detektionsspule 11 induktiv gekoppelt, welche mit dem Messinstrument 25 elektrisch leitend verbunden ist.

Dabei sind auf diesen Kacheln 14 jeweils diskrete Kondensatoren 9 auf dem leitfähigen Bereich 6 aufgebracht. Auch hier ist der leitfähige Bereich 6 durch eine Leiterschleife gebildet. Vorzugsweise ist die Leiterschleife 6 so ausgebildet, dass ein auftretender Riss mit hoher Wahrscheinlichkeit zu einer signifikanten Störung der Übertragungseigenschaften führt. Die Resonanzfrequenzen der einzelnen Kacheln 14 sind durch die Kondensatoren 9 so bestimmt, dass sie im Wesentlichen die gleiche Frequenz aufweisen. Ein durch den Wechselspannungsgenerator 26 und die mit diesem elektrisch leitend verbundene Spule 10 erzeugtes Signal regt die Resonanzfrequenz der ersten Kachel 14 an. Über die gegenüberliegenden Spulen 8, 7 benachbart angeordneter Kacheln 14 wird dieses Signal auf die jeweils folgende Kachel 14 übertragen und deren Resonanzfrequenz ebenfalls angeregt. Am Ende der Kette ist mit der Spule 11 ein Signal an der Spule 8 der letzten Kachel 14 detektierbar.

Tritt nun an irgendeiner Kachel 14 ein Riss auf, so wird die Leiterschleife 6 dieser Kachel 14 unterbrochen. In dieser Kachel 14 kann durch deren Leiterschleife 6 kein Strom mehr fließen. Folglich reißt die Schwingung an dieser Kachel 14 ab, so dass die leitfähigen Bereiche 6 der nachfolgenden Kacheln 14 nicht mehr zum Schwingen angeregt werden. Die Spule 11 detektiert in diesem Fall kein Signal, so dass das Messinstrument 25 kein Signal anzeigt. Ein Bediener kann somit unmittelbar einen Defekt einer Kachel 14 ermitteln.

In Fig. 5 ist ein elektrisches Schaltbild der Anordnung von gekoppelten Kacheln 14 dargestellt. Fig. 5 zeigt eine Anordnung mit koppelnden Parallelschwingkreisen auf den Kacheln 14. Sowohl die Spule 10 als auch die Spule 11 können selbst Bestandteil eines Schwingkreises sein. Insbesondere kann die Induktivität der Leiterschleife 6 durch die Leiterbahndimensionierung und -führung bestimmt oder beeinflusst werden. Durch die Verwendung von Parallelschwingkreisen kann zum einen erreicht werden, dass die zum Betrieb erforderliche Energie reduziert werden kann und zum anderen kann die Messempfindlichkeit erhöht werden, da zur Anregung einer Resonanz in einer Detektionseinrichtung nur eine sehr geringe Energie erforderlich ist, sofern sie im Bereich einer Resonanz liegt. Bereits geringe Beschädigungen können zu großen Messsignaländerungen führen.

Fig. 6 zeigt eine typische Dämpfungskurve für ein System aus gekoppelten Kacheln 14 gemäß Fig. 3. Deutlich zu erkennen ist die Resonanzüberhöhung im Bereich der Resonanzfrequenz der Kachelanordnung. Die vorliegende Erfindung liefert demnach bei Anregung der Resonanzfrequenz bereits mit geringer Anregungsenergie ein deutliches Messsignal. Selbst eine geringe Kopplung zwischen den einzelnen Kacheln 14 kann zu einem gut detektierbaren Signal führen, sofern die Güte des Resonanzkreises entsprechend hoch ist. Die Abflachung der Dämpfungskurve ergibt sich dadurch, dass nicht alle Resonanzfrequenzen der Kacheln 14 exakt gleich sind, sondern in einem Frequenzbereich liegen.

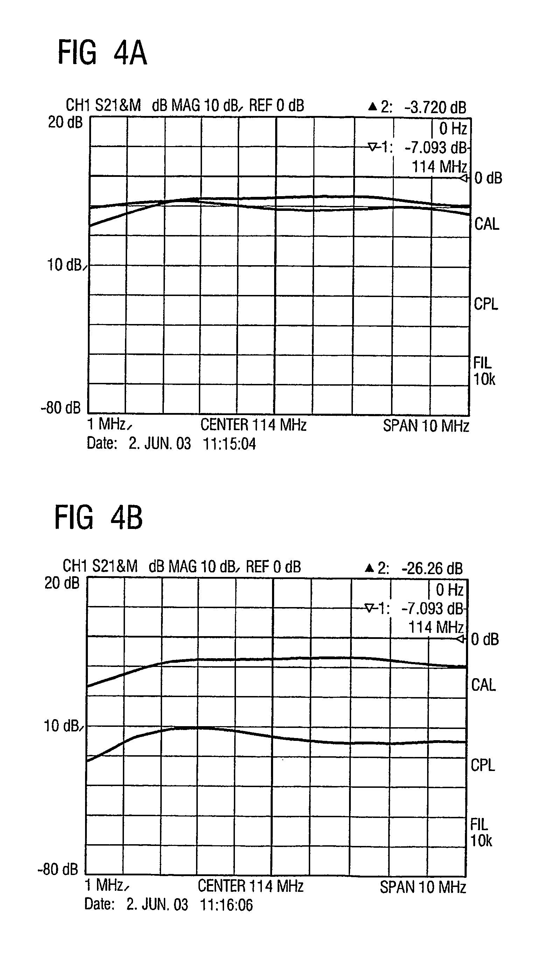

Fig. 4A und 4B zeigen die Dämpfung des Messsignals bei unterschiedlichen Defekten. In Fig. 4A und 4B stellt die obere Kurve jeweils die Dämpfung einer unbeschädigten Leiterschleife 6 dar. Ist eine Leitung der Leiterschleife 6 in Fig. 5 unterbrochen, stellt sich der in Fig. 4A durch die untere Kurve dargestellte Verlauf der Dämpfung ein. Sind dagegen beide Leitungen unterbrochen, weist die Dämpfung den in Fig. 4B durch die untere Kurve dargestellten Verlauf auf.

## Patentansprüche

1. System zur Ermittlung einer Beschädigung einer Wand (2) für einen Strömungskanal (3) einer Strömungsmaschine (1), insbesondere eine Brennkammerwand (20) einer Gasturbine, mit
- wenigstens zwei Wandelementen (12, 14), wobei
- die Wand (2) die Wandelemente (12, 14) aufweist,
- die Wandelemente (12, 14) jeweils einen elektrisch leitfähigen Bereich (6) aufweisen, der zumindest bereichsweise fest mit dem jeweiligen Wandelement (12, 14) verbunden ist,
- einer elektrischen Energiequelle (4) zur Erzeugung einer elektrischen Größe im leitfähigen Bereich (6) eines ersten der wenigstens zwei Wandelemente (12, 14)
und
- einem Sensor (5) zur Detektion der elektrischen Größe im leitfähigen Bereich (6) eines letzten der wenigstens zwei Wandelemente (12, 14),
**dadurch gekennzeichnet dass**
- die leitfähigen Bereiche (6) zueinander benachbart angeordneter Wandelemente (12, 14) kontaktlos miteinander magnetisch oder/und kapazitiv verkettet sind, und
- die Energiequelle (4) kontaktlos mit dem leitfähigen Bereich (6) des ersten Wandelementes (12, 14) und/oder der Sensor (5) kontaktlos mit dem leitfähigen Bereich (6) des letzten Wandelementes (12, 14) gekoppelt sind.

2. System nach Anspruch 1, **dadurch gekennzeichnet, dass** der leitfähige Bereich (6) als geschlossener elektrischer Leiter ausgebildet ist.

3. System nach Anspruch 1 oder 2, **dadurch gekennzeichnet, dass** der leitfähige Bereich (6) einen Teilbereich (7) zur Einkopplung der elektrischen Größe aufweist.

4. System nach einem der vorhergehende Ansprüche, **dadurch gekennzeichnet, dass** der leitfähige Bereich (6) einen Teilbereich (8) zur Detektion der elektrischen Größe aufweist.

5. System nach einem der vorhergehende Ansprüche, **dadurch gekennzeichnet, dass** der leitfähige Bereich (6) Resonanzeigenschaften aufweist.

6. System nach einem der vorhergehende Ansprüche, **dadurch gekennzeichnet, dass** der leitfähige Bereich (6) ein kapazitives elektrisches Element (9) aufweist.

7. System nach einem der vorhergehende Ansprüche, **dadurch gekennzeichnet, dass** die Energiequelle (4) eine Leiterschleife (10) aufweist.

8. System nach Anspruch 7, **dadurch gekennzeichnet, dass** die Energiequelle (4) eine Wechselspannungsquelle ist.

9. System nach einem der vorhergehende Ansprüche, **dadurch gekennzeichnet, dass** der Sensor (5) durch eine mit einer Messeinheit (25) verbundene Leiterschleife (11) gebildet ist.

10. System nach Anspruch 9, **dadurch gekennzeichnet, dass** die Messeinheit (25) eine Wechselspannungsmessvorrichtung ist.

11. System nach einem der vorhergehende Ansprüche, **dadurch gekennzeichnet, dass** der leitfähige Bereich (6) an der dem Strömungskanal (3) gegenüberliegenden Seite (13) des jeweiligen Wandelementes (2) angeordnet ist.

12. System nach einem der vorhergehende Ansprüche, **gekennzeichnet durch** Kacheln als Wandelemente (12, 14).

13. System nach einem der vorhergehende Ansprüche, **gekennzeichnet durch** zumindest ein einstückig mit dem leitfähigen Bereich (6) ausgebildetes Wandelement (12, 14).

14. System nach Anspruch 12, **dadurch gekennzeichnet, dass** der leitfähige Bereich einen Teilbereich (7, 8) zur Kopplung aufweist.

15. System nach Anspruch 13 oder 14, **dadurch gekennzeichnet, dass** an wenigstens zwei gegenüberliegenden Enden des Wandelements jeweils ein Teilbereich (7, 8) zur Kopplung angeordnet ist.

16. System nach einem der Ansprüche 13 bis 15, **dadurch gekennzeichnet, dass** der leitfähige Bereich (6) durch eine Metallschicht gebildet ist.

17. System nach einem der Ansprüche 13 bis 16, **dadurch gekennzeichnet, dass** der leitfähige Bereich (6) durch eine Widerstandsschicht gebildet ist.

18. System nach einem der Ansprüche 13 bis 16, **dadurch gekennzeichnet, dass** der leitfähige Bereich (6) eine mäanderförmige Struktur aufweist.

19. Verfahren zum Ermitteln einer Beschädigung einer Wand (2) eines Strömungskanals (3) einer Strömungsmaschine (1), insbesondere einer Brennkammerwand (20) einer Gasturbine, mit einem System nach einem der Ansprüche 1 bis 12, wobei
- mittels der Energiequelle (4) im leitfähigen Bereich (6) des ersten der wenigstens zwei Wandelemente (12, 14) eine elektrische Größe erzeugt wird,
- die Teilbereiche der elektrischen Bereiche (6) von zueinander benachbart angeordneten Wandelementen (12, 14) miteinander magnetisch oder kapazitiv koppeln,
- die elektrische Größe auf die leitfähigen Bereiche (6) der wenigstens zwei Wandelemente (12, 14) einwirkt,
- die elektrische Größe im leitfähigen Bereich (6) des letzten der wenigstens zwei Wandelemente (12, 14) mittels des Sensors (5) detektiert wird, und
- die elektrische Größe kontaktlos erzeugt und/oder detektiert wird.

20. Verfahren nach Anspruch 19, **dadurch gekennzeichnet, dass** als elektrische Größe ein elektrischer Strom oder eine elektrische Spannung verwendet wird, wobei der Strom oder die Spannung mittels induktiver oder kapazitiver Kopplung im leitfähigen Bereich erzeugt wird.

21. Verfahren nach Anspruch 20, **dadurch gekennzeichnet, dass** der Strom oder die Spannung im leitfähigen Bereich (6) mittels kapazitiver oder induktiver Kopplung detektiert wird.

22. Verfahren nach einem der Ansprüche 20 bis 21, **dadurch gekennzeichnet, dass** als Strom ein Wechselstrom oder als Spannung eine Wechselspannung verwendet wird.

23. Verfahren nach Anspruch 22, **dadurch gekennzeichnet, dass** eine Frequenz des Wechselstroms oder der Wechselspannung im Bereich einer Resonanz des leitfähigen Bereichs (6) verwendet wird.

24. Gasturbine (1) mit an einer in einem Strömungskanal (3) eines Gehäuses (15) drehbar gelagerten Rotorwelle (16) angeordneten Laufschaufeln (17) und drehfest angeordneten Leitschaufeln (18), wobei die Gasturbine (1) eine Brennkammer (19) mit einer Brennkammerwand (20) aufweist, **gekennzeichnet durch** ein System zur Ermittlung einer Beschädigung einer Brennkammerwand (20) nach einem der Ansprüche 1 bis 12.

25. Verfahren zum Ermitteln einer Beschädigung einer Brennkammerwand (20) einer Gasturbine (1) nach Anspruch 24, **gekennzeichnet durch** ein Verfahren nach einem der Ansprüche 19 bis 23.

## Claims

1. System for the determination of damage to a wall (2) for a flow duct (3) of a turbo-engine (1), in particular to a combustion-chamber wall (20) of a gas turbine, with
- at least two wall elements (12, 14),
- the wall (2) having the wall elements (12, 14),
- the wall elements (12, 14) each having an electrically conductive region (6) which is fixedly connected, at least in regions, to the respective wall element (12, 14),
- an electrical energy source (4) for generating an electrical variable in the conductive region (6) of a first of the at least two wall elements (12, 14),
and
- a sensor (5) for detecting the electrical variable in the conductive region (6) of a last of the at least two wall elements (12, 14),
**characterized in that**
- the conductive regions (6) of wall elements (12, 14) arranged adjacently to one another are linked contactlessly to one another magnetically and/or capacitively, and
- the energy source (4) is coupled contactlessly to the conductive region (6) of the first wall element (12, 14) and/or the sensor (5) is coupled contactlessly to the conductive region (6) of the last wall element (12, 14).

2. System according to Claim 1, **characterized in that** the conductive region (6) is designed as a closed electrical conductor.

3. System according to Claim 1 or 2, **characterized in that** the conductive region (6) has a part-region (7) for inputting the electrical variable.

4. System according to one of the preceding claims, **characterized in that** the conductive region (6) has a part-region (8) for detecting the electrical variable.

5. System according to one of the preceding claims, **characterized in that** the conductive region (6) has resonance properties.

6. System according to one of the preceding claims, **characterized in that** the conductive region (6) has a capacitive electrical element (9).

7. System according to one of the preceding claims, **characterized in that** the energy source (4) has a conductor loop (10).

8. System according to Claim 7, **characterized in that** the energy source (4) is an alternating-voltage source.

9. System according to one of the preceding claims, **characterized in that** the sensor (5) is formed by a conductor loop (11) connected to a measurement unit (25).

10. System according to Claim 9, **characterized in that** the measurement unit (25) is an alternating-voltage measurement device.

11. System according to one of the preceding claims, **characterized in that** the conductive region (6) is arranged on that side (13) of the respective wall element (2) which lies opposite the flow duct (3).

12. System according to one of the preceding claims, **characterized by** tiles as wall elements (12, 14).

13. System according to one of the preceding claims, **characterized by** at least one wall element (12, 14) formed in one piece with the conductive region (6).

14. System according to Claim 12, **characterized in that** the conductive region has a part-region (7, 8) for coupling.

15. System according to Claim 13 or 14, **characterized in that** a part-region (7, 8) for coupling is arranged at each of at least two opposite ends of the wall element.

16. System according to one of Claims 13 to 15, **characterized in that** the conductive region (6) is formed by a metal layer.

17. System according to one of Claims 13 to 16, **characterized in that** the conductive region (6) is formed by a resistance layer.

18. System according to one of Claims 13 to 16, **characterized in that** the conductive region (6) has a meander-shaped structure.

19. Method for the determination of damage to a wall (2) of a flow duct (3) of a turbo-engine (1), in particular to a combustion-chamber wall (20) of a gas turbine, by means of a system according to one of Claims 1 to 12,
- an electrical variable being generated in the conductive region (6) of the first of the at least two wall elements (12, 14) by means of the energy source (4),
- the part-regions of the electrical regions (6) of wall elements (12, 14) arranged adjacently to one another being coupled to one another magnetically or capacitively,
- the electrical variable acting on the conductive regions (6) of the at least two wall elements (12, 14),
- the electrical variable in the conductive region (6) of the last of the at least two wall elements (12, 14) being detected by means of the sensor (5), and
- the electrical variable being generated and/or detected contactlessly.

20. Method according to Claim 19, **characterized in that** the electrical variable used is an electrical current or an electrical voltage, the current or voltage being generated in the conductive region by means of inductive or capacitive coupling.

21. Method according to Claim 20, **characterized in that** the current or voltage in the conductive region (6) is detected by means of capacitive or inductive coupling.

22. Method according to either one of Claims 20 and 21, **characterized in that** an alternating current is used as current or an alternating voltage is used as voltage.

23. Method according to Claim 22, **characterized in that** a frequency of the alternating current or of the alternating voltage in the resonant range of the conductive region (6) is used.

24. Gas turbine (1) with moving blades (17) arranged on a rotor shaft (16) mounted rotatably in a flow duct (3) of a casing (15), and with guide vanes (18) arranged fixedly in a rotatable fashion, the gas turbine (1) having a combustion chamber (19) with a combustion-chamber wall (20), **characterized by** a system for the determination of damage to a combustion-chamber wall (20) according to one of Claims 1 to 12.

25. Method for the determination of damage to a combustion-chamber wall (20) of a gas turbine (1) according to Claim 24, **characterized by** a method according to one of Claims 19 to 23.

## Revendications

1. Système de détermination d'un dommage subi par une paroi ( 2 ) d'un canal ( 3 ) d'écoulement d'une turbomachine ( 1 ), notamment d'une paroi ( 20 ) de chambre de combustion d'une turbine à gaz, comprenant
- au moins deux éléments ( 12, 14 ) de paroi, dans lequel
- la paroi ( 2 ) a les éléments ( 12, 14 ) de paroi,
- les éléments ( 12, 14 ) de paroi ont respectivement une partie ( 6 ) conductrice de l'électricité qui est reliée au moins par endroit solidement à l'élément ( 12, 14 ) respectif de paroi,
- une source ( 4 ) d'énergie électrique pour la production d'une grandeur électrique dans la partie ( 6 ) conductrice d'un premier des au moins deux éléments ( 12, 14 ) de paroi, et
- un capteur ( 5 ) de détection de la grandeur électrique dans la partie ( 6 ) conductrice d'un dernier des au moins deux éléments ( 12, 14 ) de paroi,
**caractérisé en ce que**
- les parties ( 6 ) conductrices des au moins éléments ( 12, 14 ) de paroi disposés au voisinage l'un de l'autre sont reliées magnétiquement ou/et capacitivement l'une à l'autre sans contact, et
- la source ( 4 ) d'énergie est couplée sans contact à la partie ( 6 ) conductrice du premier élément ( 12, 14 ) de paroi et/ou le capteur ( 5 ) est couplé sans contact à la partie ( 6 ) conductrice du dernier élément ( 12, 14 ) de paroi.

2. Système suivant la revendication 1, **caractérisé en ce que** la partie ( 6 ) conductrice est constituée sous la forme d'un conducteur électrique sans fin.

3. Système suivant la revendication 1 ou 2, **caractérisé en ce que** la partie ( 6 ) conductrice a une sous-partie ( 7 ) pour l'injection de la grandeur électrique.

4. Système suivant l'une des revendications précédentes, **caractérisé en ce que** la partie ( 6 ) conductrice a une sous-partie ( 8 ) pour la détection de la grandeur électrique.

5. Système suivant l'une des revendications précédentes, **caractérisé en ce que** la partie ( 6 ) conductrice a des propriétés de résonance.

6. Système suivant l'une des revendications précédentes, **caractérisé en ce que** la partie ( 6 ) conductrice a un élément ( 9 ) électrique capacitif.

7. Système suivant l'une des revendications précédentes, **caractérisé en ce que** la source ( 4 ) d'énergie a une boucle ( 10 ) conductrice.

8. Système suivant la revendication 7, **caractérisé en ce que** la source ( 4 ) d'énergie est une source de tension alternative.

9. Système suivant l'une des revendications précédentes, **caractérisé en ce que** le capteur ( 5 ) est formé par une boucle ( 11 ) conductrice reliée à une unité ( 25 ) de mesure.

10. Système suivant la revendication 9, **caractérisé en ce que** l'unité ( 25 ) de mesure est un dispositif de mesure d'une tension alternative.

11. Système suivant l'une des revendications précédentes, **caractérisé en ce que** la partie ( 6 ) conductrice est disposée du côté ( 13 ) de l'élément ( 12 ) de paroi, qui est opposé au canal ( 3 ) d'écoulement.

12. Système suivant l'une des revendications précédentes, **caractérisé par** des carreaux comme éléments ( 12, 14 ) de paroi.

13. Système suivant l'une des revendications précédentes, **caractérisé par** au moins un élément ( 12, 14 ) de paroi constitué d'un seul tenant avec la partie ( 6 ) conductrice.

14. Système suivant la revendication 12, **caractérisé en ce que** la partie conductrice a une sous-partie ( 7, 8 ) pour le couplage.

15. Système suivant la revendication 13 ou 14,
**caractérisé en ce que** respectivement une sous-partie ( 7, 8 ) est disposée pour le couplage sur au moins deux extrémités opposées de l'élément de paroi.

16. Système suivant l'une des revendications 13 à 15, **caractérisé en ce que** la partie ( 6 ) conductrice est formée par une couche métallique.

17. Système suivant l'une des revendications 13 à 16, **caractérisé en ce que** la partie ( 6 ) conductrice est formée par une couche résistive.

18. Système suivant l'une des revendications 13 à 16, **caractérisé en ce que** la partie ( 6 ) conductrice a une structure sinueuse.

19. Procédé de détermination d'un dommage subi par une paroi ( 2 ) d'un canal ( 3 ) d'écoulement, une turbomachine ( 1 ), notamment par une paroi ( 20 ) de la chambre de combustion d'une turbine à gaz par un système suivant l'une des revendications 1 à 12, dans lequel
- on produit une grandeur électrique au moyen de la source ( 4 ) d'énergie dans la partie ( 6 ) conductrice du premier des au moins deux éléments ( 12, 14 ) de paroi,
- on couple magnétiquement ou capacitivement entre elles les sous-parties des parties ( 6 ) électriques d'éléments ( 12, 14 ) de paroi de paroi disposés au voisinage l'un de l'autre,
- la grandeur électrique agit sur les parties ( 6 ) conductrices des au moins deux éléments ( 12, 14 ) de paroi,
- on détecte au moyen du capteur ( 2 ) la grandeur électrique dans la partie ( 6 ) conductrice du dernier des au moins deux éléments ( 12, 14 ) de paroi, et
- on produit et/ou on détecte sans contact la grandeur électrique.

20. Procédé suivant la revendication 19, **caractérisé en ce que** l'on utilise comme grandeur électrique un courant électrique ou une tension électrique, le courant ou la tension étant produit au moyen d'un couplage inductif ou capacitif dans la partie conductrice.

21. Procédé suivant la revendication 20, **caractérisé en ce que** l'on détecte le courant ou la tension dans la partie ( 6 ) conductrice au moyen d'un couplage capacitif ou inductif.

22. Procédé suivant l'une des revendications 20 à 21, **caractérisé en ce que** l'on utilise comme courant un courant alternatif ou comme tension une tension alternative.

23. Procédé suivant la revendication 22, **caractérisé en ce que** l'on utilise une fréquence du courant alternatif ou de la tension alternative dans le domaine d'une résonance de la partie ( 6 ) conductrice.

24. Turbine ( 1 ) à gaz ayant des aubes ( 17 ) mobiles disposées sur un arbre ( 16 ) de rotor monté tournant dans un canal ( 3 ) d'écoulement d'un carter ( 15 ) et des aubes ( 18 ) directrices disposées de manière fixe en rotation, la turbine ( 1 ) à gaz ayant une chambre de combustion ( 19 ) ayant une paroi ( 20 ) de chambre de combustion, **caractérisé par** un système de détermination d'un dommage subi par une paroi ( 20 ) de la chambre de combustion suivant l'une des revendications 1 à 12.

25. Procédé de détermination d'un dommage subi par une paroi ( 20 ) d'une chambre de combustion d'une turbine ( 1 ) à gaz suivant la revendication 24, **caractérisé par** un procédé suivant l'une des revendications 19 à 23.
